# EUROPÄISCHE PATENTANMELDUNG

(11) **EP 1 610 017 A1**
(43) Veröffentlichungstag der Anmeldung: **28.12.2005**
(21) Anmeldenummer: 05012846.1
(22) Anmeldetag: 15.06.2005
(51) Int. Cl.: F16D 21/06, F16D 13/72

(54) **Drehmomentübertragungseinrichtung und Antriebstrang mit dieser**

(30) Priorität: 21.06.2004 DE 102004029781
(71) Anmelder: LuK Lamellen und Kupplungsbau Beteiligungs KG, 77815 Bühl (DE)
(72) Erfinder: Agner, Ivo, 77815 Bühl (DE); Bergmann, Jochen, 76131 Karlsruhe (DE); Nöhl, Oliver, 77830 Bühlertal (DE)

(57) **Zusammenfassung**

Die Erfindung betrifft eine Drehmomentübertragungseinrichtung (1) im Antriebsstrang eines Kraftfahrzeugs zur Übertragung von Drehmoment zwischen einer Brennkraftmaschine (3) mit einer Kurbelwelle (4) und einem Getriebe mit zumindest einer Getriebeeingangswelle (31,42) mit mindestens einer Reibungskupplung (27,38).

Die Drehmomentübertragungseinrichtung (1) ist gekennzeichnet durch die Kombination folgender Merkmale: Die Getriebeeingangswelle (31,42) ist mit der Kurbelwelle (4) mittels der Reibungskupplung (27,38) koppelbar; die Reibungskupplung (27,38) verfügt über antriebsseitige und/oder abtriebsseitige Reibeinheiten (78,79), die mittels einer axialen Verpressung entlang einer Rotationsachse (80) der Getriebeeingangswelle (31,42) miteinander zur Bildung eines Reibeingriffs beaufschlagbar sind; die Reibeinheit beziehungsweise die Reibeinheiten (78,79) ist beziehungsweise sind aus einer Mehrzahl schichtweise in axialer Richtung antriebsseitig und abtriebsseitig abwechselnder Reibpartner gebildet; die Reibeinheit beziehungsweise die Reibeinheiten (78,79) der Reibungskupplung (27,38) werden mittels eines der jeweiligen Reibeinheit zugeordneten Betätigungsteils (44,45) entgegen eines Anschlags beaufschlagt; mit dem Betätigungsteil (44,45) der Reibungskupplung (27,38) ist unter Zwischenschaltung eines Betätigungslagers (48,49) eine drehfest mit einem feststehenden Gehäuseteil (58) verbundene, axial auf das jeweilige Betätigungsteil (44,45) einwirkende Betätigungsvorrichtung (51,52) angeordnet; die Reibungskupplung (27,38) wird in nasser Betriebsweise betrieben.

## Beschreibung

Die Erfindung betrifft eine Drehmomentübertragungseinrichtung im Antriebsstrang eines Kraftfahrzeugs zur Übertragung von Drehmoment zwischen einer Brennkraftmaschine mit einer Kurbelwelle und einem Getriebe mit zumindest einer Getriebeeingangswelle mit mindestens einer Reibungskupplung. Die Erfindung betrifft auch eine Drehmomentübertragungseinrichtung insbesondere für einen Antriebsstrang mit einer Brennkraftmaschine und einem Doppelkupplungsgetriebe mit zwei Getriebeeingangswellen und einer Getriebeausgangswelle, wobei jede Getriebeeingangswelle mittels einer Kupplung der Drehmomentübertragungseinrichtung mit einer Brennkraftmaschine verbindbar ist.

Doppelkupplungsgetriebe mit zwei Getriebeeingangswellen, bei denen eine Drehmomentübertragungseinrichtung jeweils einer Nasskupplung für jede Getriebeeingangswelle, wobei die Nasskupplungen mittels entsprechender Kolbeneinheiten hydrostatisch betätigt werden und der hierfür notwendige Druck sowie gegebenenfalls der Druck zur Kühlung der Kupplungen im Bedarfsfall von einer Druckmittelpumpe generiert wird, sind bekannt. Derartige Pumpen haben hohe Leistungen und verbrauchen entsprechen viel Energie. Zwischen der Pumpe und den Kolbeneinheiten sind zum Aufbau eines von der Pumpe mittels eines Druckmittels erzeugten Drucks zur Betätigung der Kupplungen Drehdurchführungen mit Dichtungen vorgesehen, die zwischen drehenden und stehenden Bauteilen abdichten. Entsprechende Vorkehrungen zur Standzeit dieser Dichtungen müssen getroffen werden.

Aufgabe der Erfindung ist die Verbesserung einer Drehmomentübertragungseinrichtung und eines Antriebsstrang dahingehend, dass über die Kupplungen der beiden Getriebeeingangswellen bei geringem Energieverbrauch ein hohe Leistung der Brennkraftmaschine übertragen werden kann und gleichzeitig eine einfache und sichere Bedienung der Kupplungen bei hoher Übertragungsieistung und langer Standzeit möglich ist. Außerdem sollen die Herstellungskosten gering und die Fertigung und Montage einfach sein.

Die Aufgabe ist bei einer Drehmomentübertragungseinrichtung im Antriebsstrang eines Kraftfahrzeugs zur Übertragung von Drehmoment zwischen einer Brennkraftmaschine mit einer Kurbelwelle und einem Getriebe mit zumindest einer Getriebeeingangswelle mit mindestens einer Reibungskupplung durch die Kombination folgender Merkmale gelöst: Die Getriebeeingangswelle ist mit der Kurbelwelle mittels der Reibungskupplung koppelbar; die Reibungskupplung verfügt über antriebsseitige und/oder abtriebsseitige Reibeinheiten, die mittels einer axialen Verpressung entlang einer Rotationsachse der Getriebeeingangswelle miteinander zur Bildung eines Reibeingriffs beaufschlagbar sind; die Reibeinheit beziehungsweise die Reibeinheiten ist beziehungsweise sind aus einer Mehrzahl schichtweise in axialer Richtung antriebsseitig und abtriebsseitig abwechselnder Reibpartner gebildet; die Reibeinheit beziehungsweise die Reibeinheiten der Reibungskupplung werden mittels eines der jeweiligen Reibeinheit zugeordneten Betätigungsteils entgegen eines Anschlags beaufschlagt; mit dem Betätigungsteil der Reibungskupplung ist unter Zwischenschaltung eines Betätigungslagers eine drehfest mit einem feststehenden Gehäuseteilverbundene, axial auf das jeweilige Betätigungsteil einwirkende Betätigungsvorrichtung angeordnet; die Reibungskupplung wird in nasser Betriebsweise betrieben

Die Aufgabe wird durch eine Drehmomentübertragungseinrichtung im Antriebsstrang eines Kraftfahrzeugs zur Übertragung von Drehmoment zwischen einer Brennkraftmaschine mit einer Kurbelwelle und einem Doppelkupplungsgetriebe mit zumindest zwei Getriebeeingangswellen mit zwei Reibungskupplungen unter Verwendung folgender Merkmale gelöst:

Je eine Getriebeeingangswelle ist mit der Kurbelwelle mittels einer Reibungskupplung koppelbar. Die Anordnung der Getriebeeingangswellen kann konzentrisch mit einer um eine erste Getriebeeingangswelle angeordneten, als Hohlwelle ausgebildeten zweiten Getriebeeingangswelle oder mit parallel zueinander angeordneten Getriebeeingangswellen sein.

Jede Reibungskupplung verfügt über antriebsseitige und abtriebsseitige Reibeinheiten, die mittels einer axialen Verpressung entlang einer Rotationsachse zumindest einer der Getriebeeingangswellen mit einander zur Bildung eines Reibeingriffs als Reibpartner beaufschlagbar sind. Beispielsweise können von einem Eingangsteil angetriebene und ein Ausgangsteil beaufschlagende Lamellen abwechselnd zu einem Lamellenpaket aufgeschichtet sein, wobei die abtriebsseitigen und/oder die antriebsseitigen Lamellen Reibbeläge zur Erhöhung des Reibwertes der Reibpartner erhöhen können.

Die Reibeinheiten der beiden Reibungskupplungen sind radial übereinander angeordnet. Um eine gleichmäßige Übertragungsleistung der beiden Reibungskupplungen vorzusehen, können die beiden Reibungskupplungen bezüglich ihrer Reibleistung aufeinander abgestimmt sein, beispielsweise können die ringförmigen Reibpartner der radial äußeren Reibungskupplungen eine kleinere Differenz zwischen Innen- und Außendurchmesser aufweisen und/oder die Reibeinheit der radial äußeren Reibungskupplung kann weniger Reibelemente aufweisen. Die Wahl unterschiedlicher Reibmaterialien kann ebenfalls von Vorteil sein.

Die Reibeinheiten jeweils einer Reibungskupplung werden mittels eines der jeweiligen Reibeinheit zugeordneten Betätigungsteils entgegen eines Anschlags beaufschlagt. Als Betätigungsteil kann ein Scheiben- oder Hebelteil vorgesehen sein, das mit einem drehenden, axial festen Teil der Kupplung befestigt und gegenüber diesem verschwenkbar sein kann und bei axialer Beaufschlagung die antriebsseitigen und abtriebsseitigen Reibpartner gegen einen Anschlag verpresst, so dass die Reibungskupplung zuerst schlupft und danach haftet. Es kann vorteilhaft sein, die Reibungskupplung nur soweit zu verpressen, das heißt zu schließen, bis das gewünschte Drehmoment von der Brennkraftmaschine auf die entsprechende Getriebeeingangswelle übertragen wird.

Mit dem Betätigungsteil jeder Reibungskupplung ist unter Zwischenschaltung eines Betätigungslagers jeweils eine drehfest mit einem feststehenden Gehäuseteil verbundene, axial auf das jeweilige Betätigungsteil einwirkende Betätigungsvorrichtung angeordnet, beide Reibungskupplungen werden in nasser Betriebsweise betrieben. Auf diese Weise kann ein Betätigungssystem ohne Drehdurchführungen vorgeschlagen werden, da der hydraulische Wirkzusammenhang Druckversorgungseinrichtung / Leitung stehend / Leitung drehend / Druckkolben zur Beaufschlagung der Kupplung - wie aus Doppelkupplungen des Stands der Technik - mittels eines mechanischen Betätigungslagers zur Drehentkopplung von Betätigungseinrichtung und Kupplung umgangen werden kann. Auf diese Weise steht auch ein Drehmomentübertragungssystem zur Verfügung, dessen Reibungskupplungen unabhängig von der Betätigung des Doppelkupplungsgetriebes - hydraulisch, pneumatisch, mechanisch oder mittels elektrischer Aktorik sowie deren Kombinationen - mit dem geeigneten Betätigungssystem ausgestattet werden kann.

Es kann daher eine Drehmomentübertragungseinrichtung mit einer Betätigungsvorrichtung vorteilhaft sein, die elektrohydraulisch ist. Dabei kann zumindest eine Betätigungsvorrichtung aus einer mittels eines Elektromotors betätigbaren hydraulischen Gebereinheit, bestehend aus einer Kolben-/Zylindereinheit, zumindest einer das entsprechende Betätigungslager axial beaufschlagenden hydraulischen Nehmereinheit , bestehend aus einer Kolben-/Zylindereinheit, und einer Gebereinheit und Nehmereinheit verbindenden Druckmittelleitung gebildet sein. Die Nehmereinheit kann mehrere, über den Umfang verteilte, um zumindest eine Getriebeeingangswelle angeordnete Untereinheiten zur Beaufschlagung eines Betätigungslagers aufweisen, wobei zur Beaufschlagung beider Reibungskupplungen beide Nehmereinheiten über den Umfang verteilte Untereinheiten aufweisen und diese über den Umfang abwechselnd verteilt und auf annähernd gleichem Umfang angeordnet sein können. Alternativ kann eine Nehmereinheit für eine Reibungskupplung aus einem druckbeaufschlagbaren Ringzylinder mit darin axial verlagerbarem Ringkolben sein, wobei zwei radial übereinander angeordnete Nehmereinheiten jeweils eine Reibungskupplung betätigen können. Besonders vorteilhaft kann eine Anordnung sein, bei der ein äußerer Ringkolben direkt axial verlagerbar auf einem radial inneren Ringkolben dichtend gelagert ist, wobei für beide Kolben ein separater Druckraum vorgesehen ist, so dass beide Kupplungen unabhängig voneinander betätigbar sind.

Insbesondere für Antriebsstränge mit einem hydraulisch betätigten Doppelkupplungsgetriebe mit einer Pumpe und einem Steuerteil zum Steuern der hydraulischen Bauelemente der Schaltung kann es vorteilhaft sein, Nehmereinheiten zur Beaufschlagen der Betätigungslager direkt in einer Wandung des Getriebegehäuses aufzunehmen, wobei diese von dem Steuerteil gesteuert mit Druck der Pumpe versorgt werden und die Kupplungen betätigen. Es kann vorteilhaft sein, eine derartige Anordnung auf für Einfachkupplung in Verbindung mit einem hydraulisch gesteuerten Automatikgetriebe wie einem automatisierten Schaltgetriebe (ASG) oder einem stufenlosen Automatikgetriebe (CVT) zu verwenden. Dabei kann eine Kolben-/Zylindereinheit in der Wandung des Getriebes und/oder im entsprechenden Steuerteil aufgenommen sein oder zumindest ein Kolben kann in einem in der Gehäusewandung oder dem Steuerteil eingearbeiteten Zylinder axial verlagerbar eingebracht sein.

Ein weiteres Ausgestaltungsbeispiel kann eine elektromechanische Betätigungsvorrichtung vorsehen, wobei die Beaufschlagung zumindest einer Reibungskupplung mittels eines im wesentlichen senkrecht zu einer der Getriebeeingangswellen angeordneten elektromotorischen Drehantriebes erfolgt, wobei die rotatorische Bewegung mittels eines Getriebes in eine translatorische Bewegung entlang einer der Getriebeeingangswellen zur Beaufschlagung des entsprechenden Betätigungslagers gewandelt wird. Hierzu sei beispielsweise die deutsche Patentanmeldung mit dem Aktenzeichen 103 40 528.3 genannt, deren Inhalt vollständig in die vorliegende Anmeldung aufgenommen ist. Alternativ hierzu kann die Beaufschlagung zumindest einer Reibungskupplung mittels eines im wesentlichen parallel oder konzentrisch zu einer der Getriebeeingangswelle angeordneten elektromotorischen Drehantriebes erfolgen, wobei die rotatorische Bewegung mittels eines Getriebes in eine translatorische entlang dieser Getriebeeingangswelle zur Beaufschlagung des entsprechenden Betätigungslagers gewandelt wird. Hierzu sei beispielsweise die deutsche Patentoffenlegung DE 100 33 649 A1 genannt.

Es versteht sich, dass die beiden im Nassbetrieb betriebenen Reibungskupplungen in speziellen Einsätzen zwangsweise geschlossene Kupplungen sein können die unter Anwendung einer Axialkraft ausgerückt werden. In Standardeinsätzen sind diese Reibungskupplungen jedoch zugedrückte Kupplungen, das heißt, sie sind im nicht von der Betätigungsvorrichtung beaufschlagten Zustand ausgerückt und werden durch Beaufschlagen mit einer Axialkraft eingerückt.

Zur Kühlung der zumindest einer der Reibungskupplungen, insbesondere wenn eine große Reibungswärme infolge Schlupf entsteht, kann es vorteilhaft sein, einen Kühlmittelstrom zur Kühlung zumindest einer Reibungskupplung mittels einer Pumpe bereit zu stellen. Zu einer weitgehend vom Getriebe unabhängigen Betriebsweise kann diese Pumpe im Bereich einer zwischen einer Wandung der Brennkraftmaschine und einer Wandung des Doppelkupplungsgetriebes gebildeten Kupplungsglocke angeordnet sein. Dabei kann ein Kühlmittelstrom aus einem mit dem Getriebe gemeinsamen Ölsumpf oder aus dem Getriebe selbst mittels der Pumpe angesaugt oder ein für die Reibungskupplungen getrennter Ölkreislauf vorgesehen sein. Es kann weiterhin vorteilhaft sein, die Pumpe insbesondere wenn keine hydraulische Pumpe zur Steuerung des Getriebes vorhanden ist, in ihrer Leistung so auszulegen, dass die Bereitstellung des Kühlmittelstroms möglich ist. Die Pumpe kann von der Kurbelwelle oder einem mit dieser verbundenen Bauteil angetrieben sein. Beispielsweise kann bei einer Anordnung der Pumpe an dem Getriebegehäuse ein Kupplungsbauteil in der Nähe des Getriebes mit der Pumpe verzahnt werden. In vorteilhafter Weise handelt es sich dabei um ein mit dem Lamellenträger verbundenes Bauteil, das mittels eines Zahnrads das Hohlrad einer radial weiter außen angeordneten Innenzahnradpumpe antreibt, wobei die Innenzahnradpumpe vorteilhafter Weise in einem Bauraum sparenden Bereich, beispielsweise zwischen zwei Getriebeaugen des Getriebes angeordnet ist. Es versteht sich, dass die Pumpe auch elektrisch angetrieben sein kann. Der Antrieb durch die Kurbelwelle oder einen Elektromotor kann mittels einer Zahnradverbindung, einem Riemenantrieb, eines Kettenantriebs oder dergleichen erfolgen.

Die Innenzahnradpumpe kann mittels eines Hohlrads mit einer Innenverzahnung angetrieben sein, wobei diese Innenverzahnung mit einer Außenverzahnung eines Sonnenrads kämmt und wobei zum Ansaugen des Kühlmittels eine Saugsichel vorgesehen ist. In vorteilhafter Weise kann das Sonnenrad mittels seiner Außenverzahnung an einem zu diesem komplementären Segment der Saugsichel radial gelagert sein, so dass eine separate Lagerung des Sonnenrads entfallen kann. Wahlweise kann auch die Verwendung einer Gerotorpumpe vorteilhaft sein. Zur Minimierung des Energiebedarfs der Pumpe kann deren Volumenstrom mittels einer Saugdrosselung geregelt werden, wobei die Saugdrosselung mittels eines mittels eines Elektromagnetventils erfolgen kann. Auf diese Weise kann ein Volumenstrom beispielsweise bis zu einer vorgegebenen Drehzahl der Antriebsdrehzahl proportional sein und ab einer Grenzdrehzahl auf einem konstanten Wert gehalten werden. Erfahrungswerte haben gezeigt, dass eine Begrenzung des Kühlmitteldrucks auf 5 bar, vorzugsweise 3 bar und ein Volumenstrom von maximal 36 l/min, vorzugsweise 24 l/min vorteilhaft sein kann. In vorteilhafter Weise kann ein zwischen Pumpe und den Reibeinheiten der Reibungskupplungen ein Ölkühler geschaltet sein. Das Kühlmittel kann durch eine entsprechende Öffnung in der Kammer in den Sumpf entweichen, wobei es vorteilhaft sein kann, infolge Fliehkrafteinflusses nach radial außen gedrängtes Kühlmittel mit einem gehäusefest angebrachten Schöpfrohr aufzufangen und in den Sumpf zu leiten. Einderartiges Schöpfrohr kann vorteilhafter Weise zu einer Baueinheit mit anderen Funktionselementen, beispielsweise einer Nehmereinheit kombiniert werden.

Nach dem erfinderischen Gedanken kann die Kupplungsglocke bis zu einem bestimmten Ölstand mit Kühl- bzw. Druckmittel, beispielsweise handelsübliches ATF, gefüllt sein.

Besonders vorteilhaft ist es jedoch, wenn in der Kupplungsglocke zwischen einer Wandung der Brennkraftmaschine und einer Wandung des Doppelkupplungsgetriebes eine separate, gegen die Kupplungsglocke flüssigkeitsdicht abgedichtete Kammer gebildet ist, in der zumindest die beiden Reibungskupplungen aufgenommen sind. Auch kann ein mit dem Getriebe gemeinsamer Bauraum vorgesehen sein. Diese Kammer kann von einem beide Reibungskupplungen umgreifenden Bauteil, beispielsweise einem topfförmigen Eingangsteil wie Lamellenträger, gebildet werden, wobei ein mit diesem verbundenes Teil auf einem feststehenden Teil wie beispielsweise einem Bauteil der Betätigungsvorrichtung oder des Getriebegehäuses dichtend und drehbar gelagert sein kann. Alternativ kann hierzu kann zur Bildung der Kammer ein Scheibenteil mit dem Getriebegehäuse fest verbunden sein und verdrehbar und flüssigkeitsdicht auf einem drehenden Teil, wie beispielsweise auf der Nabe des Eingangsteils sein.

Zur Verminderung oder Eliminierung von von der Brennkraftmaschine in das Getriebe eingetragenen Drehschwingungen kann an der Drehmomentübertragungseinrichtung ein zwischen Kurbelwelle und Eingangsteil der beiden Reibungskupplungen angeordnetes Zweimassenschwungrad vorgesehen werden. Dieses Zweimassenschwungrad kann in die mit Druckflüssigkeit befüllte Kammer (530, 630) integriert sein oder außerhalb der Kammer angeordnet sein. Das Zweimassenschwungrad kann weiterhin einen Teil des Gehäuses für die Kammer bilden und/oder ein Antriebsteil für die Pumpe aufweisen. Die Aufnahme des Zweimassenschwungrads auf der Kurbelwelle kann mittels eines axial flexiblen Scheibenteils, einer so genannten "flexplate" erfolgen. Es versteht sich, dass die Drehmomentübertragungseinrichtung ohne Zweimassenschwungrad ebenfalls in dieser Weise auf der Kurbelwelle aufgenommen sein kann. Besonders vorteilhaft in Verbindung mit den Massenverhältnissen einer Doppelkupplung in mit Nasskupplungen kann es sein, zwei entgegen zumindest eines in Umfangsrichtung wirksamen Energiespeichers relativ verdrehbaren Massen zumindest vorübergehend miteinander koppelbar zu gestalten, wobei die die Kopplung mittels einer fliehkraftabhängigen Reibeinrichtung erfolgen kann. Besonders vorteilhaft kann die Verwendung einer Koppelung bei folgenden Massenverhältnissen sein: eine erste, antriebsseitige koppelbare Masse weist ein Trägheitsmoment von 0,1 ± 0,04 kgm² und eine zweite, antriebsseitige Masse weist ein Trägheitsmoment von 0,04 ....0,08 kgm² auf. Es hat sich weiterhin als vorteilhaft erweisen, die Kopplung der beiden Massen bis zu einem Bereich von 1200 bis 1800 Umdrehungen pro Minute aufrecht zu erhalten.

Die Montage der Drehmomentübertragungseinrichtung kann in der Weise vorgesehen sein, dass die komplette Baueinheit mit Nehmereinheit und gegebenenfalls mit Zweimassenschwungrad auf den Getriebeeingangswellen des Doppelkupplungsgetriebes aufgenommen und beim Zusammenfügen von Brennkraftmaschine und Getriebe an einem axial flexiblen, mit der Kurbelwelle verbundenen Antriebsbauteil wie "flexplate" drehfest verbunden wird. Es kann auch vorteilhaft sein, Teile des Zweimassenschwungrads oder das gesamte Zweimassenschwungrad getrennt von der Kupplungseinheit mit der Kurbelwelle zu verbinden und über Verbindungselemente wie Steckverbindungen, die eine axiale Verlagerbarkeit und eine drehfeste Mitnahme der verbundene Teile erlauben, eine Verbindung von Brennkraftmaschine und Getriebe zu schaffen. Zu Führungszwecken der Drehmomentübertragungseinrichtung kann an dieser ein Pilotlager vorgesehen sein, mittels dessen die Drehmomentübertragungseinrichtung auf der Kurbelwelle verdrehbar aufgenommen ist. Eine axiale Abstützung der Drehmomentübertragungseinrichtung an der Kurbelwelle, beispielsweise mittels eines Gleitlagers kann ebenfalls von Vorteil sein. Von besonderem Vorteil kann sein, die Drehmomentübertragungseinrichtung beziehungsweise deren axial verlagerbaren Bauteile bei der Montage axial lediglich grob zu justieren, die Betätigungsvorrichtung drehfest, jedoch axial verlagerbar mit dem Getriebegehäuse zu verbinden und bei erstmaligem Betrieb der Drehmomentübertragungseinrichtung durch einen sich einstellenden axial wirksamen Druck des Getriebeöls (ATF) auf die axial verlagerbaren Bauteile endgültig zu positionieren, beispielsweise indem diese auf entsprechend angeordnete Anschläge auflaufen.

In einem besonders vorteilhaften Ausführungsbeispiel kann beispielsweise eine Drehmomentübertragungseinrichtung vorgesehen sein, bei der das Sonnenrad der Pumpe einen Lagerstummel aufweist, durch den das Sonnenrad einseitig gelagert ist. Der Lagerstummel ist vorzugsweise kurz ausgeführt und dient nur der radialen Abstützung der geringen Radialkräfte. Die Führung des Sonnenrads selber erfolgt zwischen zwei planparallelen Flächen der Gehäusewandungen. Die Kürze der Führung ist notwendig, um die Teile nicht überzubestimmen.

Ein weiteres bevorzugtes Ausführungsbeispiel der Drehmomentübertragungseinrichtung ist dadurch gekennzeichnet, dass das Hohlrad drehfest mit einem Pumpenzahnrad gekoppelt ist. Das Pumpenzahnrad ist aus akustischen Gründen vorzugsweise mit einer Schrägverzahnung ausgestattet. Bei einer einstückigen Verbindung zwischen dem Hohlrad und dem Pumpenzahnrad würden im Betrieb der Pumpe Axialkräfte auftreten, die das Hohlrad gegen eine Pumpengehäusewandung drücken würden. Das würde auf der einen Seite zu einem großen Leckagespalt und auf der anderen Seite zu einem kleinen Spalt führen. Dadurch würde sich der volumetrische Wirkungsgrad der Pumpe verschlechtern, da die Spalthöhe die Leckage in der dritten Potenz beeinflusst. Aufgrund des einseitigen Andrückens würde auch ein zusätzlicher Schleppverlust entstehen. Bei der erfindungsgemäßen zweiteiligen Ausführung von Pumpenrad und Hohlrad können diese Nachteile vermieden werden. Die Drehmomentmitnahme erfolgt vorzugsweise durch mindestens eine zum Beispiel angesinterte Nase an dem Hohlrad oder dem Pumpenzahnrad, oder durch ein zusätzliches Einlegeteil.

Ein weiteres bevorzugtes Ausführungsbeispiel der Drehmomentübertragungseinrichtung ist dadurch gekennzeichnet, dass das Pumpenzahnrad mit einem Antriebszahnrad kämmt, das mit Hilfe einer Kopplungseinrichtung drehfest mit einem Eingangsteil einer der Reibungskupplungen gekoppelt ist. Bei der Kopplungseinrichtung handelt es sich vorzugsweise um ein Blechteil. Das die Kopplungseinrichtung bildende Blechteil hat mehrere Funktionen. Erstens überträgt es das Pumpendrehmoment auf das Antriebszahnrad. Darüber hinaus dient das Blechteil als Öldurchführung des Kühlöls durch das Antriebszahnrad.

Ein weiteres bevorzugtes Ausführungsbeispiel der Drehmomentübertragungseinrichtung ist dadurch gekennzeichnet, dass die Kopplungseinrichtung mindestens eine Mitnehmernase aufweist, die in eine Mitnehmerausnehmung eingreift, die an dem Antriebszahnrad vorgesehen ist. Über die Mitnehmernase wird sichergestellt, dass das Pumpendrehmoment von der Kopplungseinrichtung auf das Antriebszahnrad übertragen wird.

Ein weiteres bevorzugtes Ausführungsbeispiel der Drehmomentübertragungseinrichtung ist dadurch gekennzeichnet, dass die Kopplungseinrichtung einen Durchgangsabschnitt mit Verbindungsnuten aufweist, die zwischen dem Antriebszahnrad und einer Lagereinrichtung angeordnet sind, durch die das Antriebszahnrad auf einer der Getriebeeingangswellen gelagert ist. Die Verbindungsnuten werden zum Beispiel von einer Art Verzahnung in dem Blechteil gebildet und ermöglichen den Durchtritt von Kühlöl, in radialer Richtung betrachtet, zwischen der Lagereinrichtung und dem Antriebszahnrad. Die Verbindungsnuten können zusätzlich noch einen Drall aufweisen, um den Ölfluss zu unterstützen.

Ein weiteres bevorzugtes Ausführungsbeispiel der Drehmomentübertragungseinrichtung ist dadurch gekennzeichnet, dass die Kopplungseinrichtung einen Abschnitt mit einer Verzahnung aufweist, über welche die Kopplungseinrichtung drehfest mit einem Koppelelement verbunden ist. Bei dem Koppelelement handelt es sich vorzugsweise um ein weiteres Blechteil, über das die Koppeleinrichtung drehfest mit dem Eingangsteil einer der Reibungskupplungen verbunden ist.

Ein weiteres bevorzugtes Ausführungsbeispiel der Drehmomentübertragungseinrichtung ist dadurch gekennzeichnet, dass das Koppelelement einen Zentrierabschnitt aufweist, der an einem der Betätigungslager anliegt. Über den Zentrierabschnitt wird das Koppelelement vorzugsweise an dem inneren Betätigungslager an dessen Innenring zentriert. Vorzugsweise ist das Koppelelement durch eine Pressverbindung mit dem Innenring des Betätigungslagers verbunden. Die Verdrehsicherung zwischen dem Koppelelement und dem Eingangsteil einer der Reibungskupplungen kann durch mindestens eine herausgebogene Nase erfolgen, die drehfest mit einem Betätigungshebel einer der Reibungskupplungen verbunden ist.

Ein weiteres bevorzugtes Ausführungsbeispiel der Drehmomentübertragungseinrichtung ist dadurch gekennzeichnet, dass die Pumpe einen Pumpendeckel aufweist, an dem das Antriebszahnrad in axialer Richtung zur Anlage kommen kann. Vorzugsweise ist der Pumpendeckel so um das Antriebszahnrad herumgezogen, dass eine durch die Schrägverzahnung entstehende Axialkraft von dem Pumpendeckel abgefangen wird. Dadurch wird eine zusätzliche Abdichtung zwischen dem Pumpendeckel und dem Antriebszahnrad geschaffen.

Ein weiteres bevorzugtes Ausführungsbeispiel der Drehmomentübertragungseinrichtung ist dadurch gekennzeichnet, dass die Pumpe an einen Getriebegehäuseabschnitt angebaut ist, an dem das Antriebszahnrad in axialer Richtung zur Anlage kommen kann. Bei dieser Ausführung wird die Verzahnung das Antriebszahnrad vorzugsweise in die andere Richtung geschwenkt, so dass zwischen dem Antriebszahnrad und dem Getriebegehäuseabschnitt eine Abdichtung erfolgt.

Ein weiteres bevorzugtes Ausführungsbeispiel der Drehmomentübertragungseinrichtung ist dadurch gekennzeichnet, dass der Kühlmittelstrom durch ein Durchgangsloch in dem Sonnenrad der Pumpe hindurchgeführt ist. Dadurch wird auf einfache Art und Weise eine zweiseitige Befüllung der Pumpe möglich und die Pumpe kann im nicht sauggeregelten Zustand bei erforderlicher Kupplungskühlung gut befüllt werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: die Darstellung eines Teilschnitts einer Drehmomentübertragungseinrichtung gemäß einem ersten Ausführungsbeispiel mit einer eingebauten Pumpe;
- Figur 2: einen Schnitt durch die Pumpe;
- Figur 3: eine ähnliche Drehmomentübertragungseinrichtung wie in Figur 1 gemäß einem zweiten Ausführungsbeispiel und
- Figur 4: eine ähnliche Drehmomentübertragungseinrichtung wie in Figur 1 gemäß einem dritten Ausführungsbeispiel.

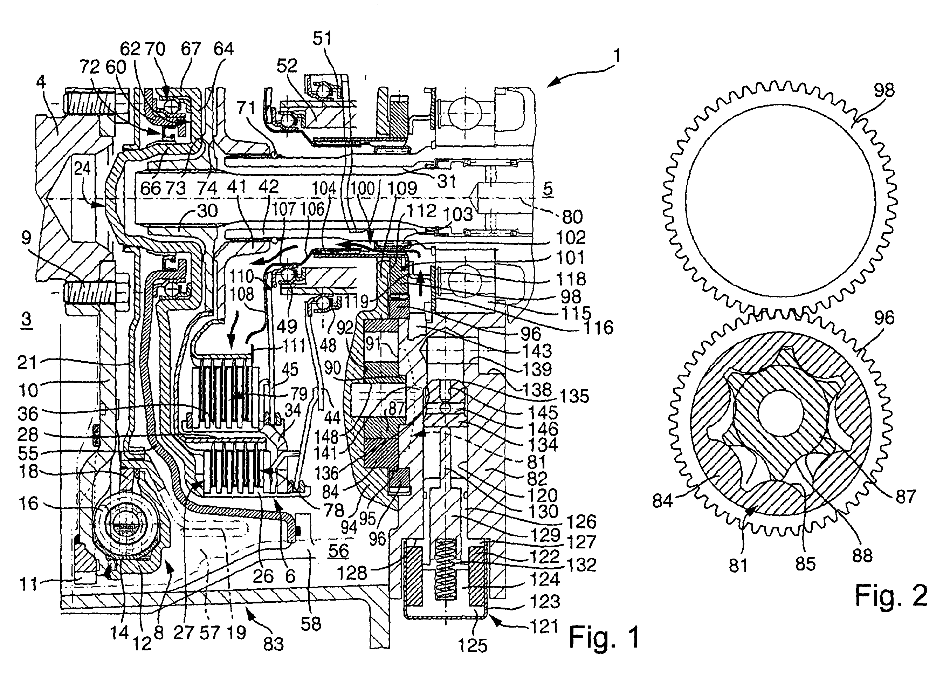

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nasslaufende Doppelkupplung 6 in Lamellenbauweise angeordnet. Zwischen die Antriebseinheit 3 und die Doppelkupplung 6 ist eine Schwingungsdämpfungseinrichtung 8 geschaltet. Bei der Schwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Schwingungsdämpfungseinrichtung 8 verbunden. Das Eingangsteil 10 der Schwingungsdämpfungseinrichtung 8 hat im Wesentlichen die Gestalt einer sich in radialer Richtung angeordneten Kreisringscheibe, an die radial außen ein Anlasserzahnkranz 11 angeschweißt ist. Außerdem ist an das Eingangsteil 10 der Schwingungsdämpfungseinrichtung 8 eine Schwungmasse 12 angeschweißt. Des Weiteren ist an dem Eingangsteil 10 der Schwingungsdämpfungseinrichtung 8 ein Schwingungsdämpferkäfig 14 befestigt, in dem mehrere Energiespeichereinrichtungen, insbesondere Federeinrichtungen 16, zumindest teilweise aufgenommen sind. In die Federeinrichtungen 16 greift ein Ausgangsteil 18 der Schwingungsdämpfungseinrichtung 8 ein. An dem Ausgangsteil 18 der Schwingungsdämpfungseinrichtung 8 ist eine weitere Schwungmasse 19 befestigt. Das Ausgangsteil 18 der Schwingungsdämpfungseinrichtung 8 ist über ein Verbindungsteil 21 fest mit einem Eingangsteil 24 der Doppelkupplung 6 verbunden. Das Kupplungseingangsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebeeingangswelle 31 verbunden ist.

Das Kupplungseingangsteil 24 beziehungsweise der einstückig mit diesem verbundene Außenlamellenträger 26 der ersten Lamellen-Kupplungsanordnung 27 ist über ein Verbindungsteil 34 drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet. Die Kolben werden in dieser Figur von Hebeln betätigt.

Die beiden Lamellen-Kupplungsanordnungen 27 und 38 werden über Betätigungshebel 44 und 45 betätigt, deren radial inneren Enden sich an Betätigungslagern 48, 49 abstützen. Die Betätigungslager 48, 49 werden mit Hilfe von Betätigungskolben 51, 52 in axialer Richtung betätigt. Die Betätigungskolben 51, 52 sind gegenüber den sich mit dem Kupplungseingangsteil 24 drehenden Betätigungshebeln 44, 45 feststehend angeordnet.

Zwischen dem Verbindungsteil 21 und dem Außenlamellenträger 26 der ersten Lamellen-Kupplungsanordnung 27 ist ein Kupplungsdeckel 55 angeordnet, der radial außen an einem Getriebegehäuseabschnitt 58 befestigt ist. Der Kupplungsdeckel 55 kann auch einstückig mit dem Getriebegehäuseabschnitt 58 ausgebildet sein. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Der Kupplungsdeckel 55 weist radial innen ein, im Querschnitt betrachtet, im Wesentlichen L-förmiges Ende 60 auf, das in einen Ringraum 62 ragt, der von einem Abschnitt des Kupplungseingangsteils 24 mit einem U-förmigen Querschnitt gebildet wird. Der U-förmige Querschnitt des Aufnahmeraums 62 umfasst eine radial angeordnete Basis 64, von der sich zwei Schenkel 66 und 67 in axialer Richtung erstrecken.

Zwischen dem Kupplungseingangsteil 24 und dem Kupplungsdeckel 55 ist ein Dünnringkugellager 70 angeordnet, das sich sowohl in radialer als auch in axialer Richtung an dem Ende 60 des Kupplungsdeckels 55 einerseits und an der Basis 64 und dem Schenkel 66 des Kupplungseingangsteils 24 andererseits abstützt. Das Dünnringkugellager 70 weist eine gegenüber der radialen Richtung verkippte Berührungsnormale auf.

Radial innerhalb und axial überlappend zu dem Dünnringkugellager 70 ist ein Radialwellendichtring 72 zwischen dem Ende 60 des Kupplungsdeckels 55 und dem Kupplungseingangsteil 24 angeordnet. Das Dünnringkugellager 70 ist vollständig in dem Nassraum 56 angeordnet, der durch den Radialwellendichtring 72 von dem Trockenraum 57 getrennt ist. Das Dünnringkugellager 70 kann sowohl auf den Kupplungsdeckel 55 als auch auf das Kupplungseingangsteil 24 vormontiert werden. Das jeweils andere Teil kann bei der Montage über den entsprechenden Lagerring gleiten. Im Bereich der Lagereinrichtung sind keine zusätzlichen axialen Sicherungsringe notwendig. Eine Verschiebung der Teile zu dem Getriebe 5 wird durch in Reihe geschaltete Anschläge 73 und 74 an den Nabenteilen 30 und 41 sowie einen Sicherungsring 71 an der zweiten Getriebeeingangswelle 42 begrenzt. Die in den Figuren 1 bis 4 dargestellten Lösungen sind auch für Einfachkupplungen anwendbar.

Jede Reibungskupplung 27, 38 verfügt über antriebsseitige und abtriebsseitige Reibeinheiten 78, 79, die mittels einer axialen Verpressung entlang einer Rotationsachse 80 zumindest einer der Getriebeeingangswellen 31, 42 miteinander zur Bildung eines Reibeingriffs beaufschlagbar sind. Die Reibeinheiten 78, 79 der beiden Reibungskupplungen 27, 38 sind radial übereinander angeordnet. Die Reibeinheiten 78, 79 sind aus einer Mehrzahl schichtweise in axialer Richtung antriebsseitig und abtriebsseitig abwechselnder Reibpartner gebildet.

Zur Kühlung zumindest einer Reibungskupplung 27, 38 wird mittels einer Pumpe 81 ein Kühlmittelstrom bereitgestellt. Die Pumpe 81 ist im Bereich einer zwischen einer Wandung der Brennkraftmaschine 3 und einer Wandung des Doppelkupplungsgetriebes 5 gebildeten Kupplungsglocke 83 angeordnet. Die Pumpe 81 ist an einen Getriebegehäuseabschnitt 82 angebaut. Die Pumpe 81 wird vorzugsweise ausschließlich für die Bereitstellung des Kühlmittelstroms und zur Schmierung verwendet. Bei der Pumpe 81 handelt es sich um eine Innenzahnradpumpe, insbesondere eine Gerotorpumpe, die über die Kurbelwelle 4 angetrieben wird.

Die Pumpe 81 umfasst ein Hohlrad 84, in die eine Außenverzahnung 88 eines Zahnrades 87 eingreift. Jede nach Pumpenbauart kann zum Ansaugen des Kühlmittels eine Saugsichel vorgesehen sein.

Dadurch dass die Pumpe nur das Öl für Schmierung und Kühlung umfördert, ist der erforderliche Maximaldruck sehr gering. Dies bedeutet, dass die mechanische Beanspruchung der Bauteile gering ist. Dadurch ist es möglich, den Pumpendeckel 94, die Pumpenzahnräder 81,87 und eventuell auch die Antriebzahnräder 98/96 aus Kunststoff, vorzugsweise einem duroplastischen Material zu fertigen. Dies ist im Vergleich zu Sintermaterial und der hier erforderlichen mechanischen Nachbearbeitung kostengünstiger, da bei den Kunststoffteilen, die mechanische Nachbearbeitung größtenteils entfallen kann. Auch das Gehäuse um das Saugregelventil und der Ventilkolben des Saugregelventils können aus Kunststoff sein, wenn es ich konstruktiv anbietet, das Saugregelventil in den Pumpendeckel zu integrieren oder in ein separates Teil zu legen, bei dem keine Lagerkräfte der Getriebewellen abgestützt werden müssen.

Das Sonnenrad 87 weist einen zentralen Lagerstummel 90 auf, und ist mit einer zentralen Durchgangsbohrung versehen, die in axialer Richtung verläuft. Der Lagerstummel 90 ist in einer kreisrunden Aussparung in dem Getriebegehäuseabschnitt 82 drehbar aufgenommen. Der Lagerstummel 90 ist bewusst kurz ausgeführt und dient nur der radialen Abstützung der im Betrieb der Pumpe 81 auftretenden, geringen Radialkräfte. Die Führung des Sonnenrads 87 erfolgt durch die Anordnung desselben zwischen zwei planparallelen Flächen 91, 92 an dem Getriebegehäuseabschnitt 82 und einem Pumpendeckel 94, der an den Getriebegehäuseabschnitt 82 angeschraubt ist. Die Kürze des Lagerstummels 90 ist notwendig, um die Teile nicht statisch überzubestimmen.

Radial außen ist an dem Hohlrad 84 mindestens eine Mitnehmernase 95 ausgebildet, die in eine komplementär ausgebildete Ausnehmung eingreift, die radial innen an einem Pumpenzahnrad 96 vorgesehen ist. Das Pumpenzahnrad 96 befindet sich mit einem Antriebszahnrad 98 in Eingriff, das, ebenso wie das Pumpenzahnrad 96, mit einer Schrägverzahnung ausgestattet ist. Die Schrägverzahnung ist aus akustischen Gründen vorzuziehen. Ansonsten könnte auch eine gerade Verzahnung verwendet werden. Es ist auch möglich, das Pumpenzahnrad 96 einstückig mit dem Hohlrad 84 auszubilden. Bei einer einstückigen Verbindung des Hohlrads 84 der Pumpe 81 mit dem Pumpenzahnrad 96 entstehen jedoch Axialkräfte, die das Hohlrad 84 immer gegen eine Pumpengehäusewandung drücken. Dies führt auf der einen Seite zu einem großen Leckagespalt und auf der anderen Seite zu einem kleinen Spalt. Dadurch verschlechtert sich der volumetrische Wirkungsgrad, da die Spalthöhe die Leckage in der dritten Potenzhöhe beeinflusst. Aufgrund des einseitigen Andrückens entsteht auch ein zusätzlicher Schleppverlust. Bei der erfindungsgemäßen, geteilten Ausführung von Hohlrad 84 und Pumpenzahnrad 96 können diese Nachteile vermieden werden. Die Drehmomentmitnahme erfolgt durch die zum Beispiel angesinterte Mitnehmernase 95. die sowohl an dem Hohlrad 84 als auch an dem Pumpenzahnrad 96 ausgebildet sein kann, oder durch ein zusätzliches Einlegeteil.

Der Antrieb des Antriebszahnrads 98 erfolgt über eine Kopplungseinrichtung 100, die von einem Blechteil gebildet wird. Die Kopplungseinrichtung 100 hat im Wesentlichen die Gestalt eines Kreiszylindermantels, der konzentrisch zu der Rotationsachse 80 angeordnet ist. An dem dem Getriebe 5 zugewandten Ende der Kopplungseinrichtung 100 ist mindestens eine Mitnehmernase 101 ausgebildet, die in eine komplementäre Ausnehmung eingreift, die radial innen an dem Antriebszahnrad 98 vorgesehen ist. Von der Mitnehmernase 101 geht ein Durchgangsabschnitt 102 aus, der, in radialer Richtung betrachtet, zwischen dem Antriebszahnrad 98 und einem Nadellager 103 angeordnet ist, durch welches das Antriebszahnrad 98 drehbar auf der Getriebeeingangswelle 42 gelagert ist. Der Durchgangsabschnitt 102 dient neben seiner Lagerfunktion noch dazu, den Durchtritt von Kühlmittel zwischen dem Nadellager 103 und dem Antriebszahnrad 98 zu ermöglichen. Zu diesem Zweck sind in den Durchgangsabschnitt 102 Verbindungsnuten eingeformt, die, zum Beispiel in der Art einer Verzahnung in axialer Richtung verlaufen. Die Verbindungsnuten können zusätzlich noch einen Drall aufweisen, um den Kühlmittelfluss zu unterstützen.

Statt des Nadellagers 103 kann auch ein Gleitlager zur radialen Lagerung des Antriebszahnrads 98 auf der Getriebeeingangswelle 42 verwendet werden. An dem der Brennkraftmaschine 3 zugewandten Ende der Kopplungseinrichtung 100 ist ein Verzahnungsabschnitt 104 ausgebildet, über den die Kopplungseinrichtung 100 mit einem Kopplungselement 106 drehfest verbunden ist. Das Kopplungselement 106 wird von einem Blechteil gebildet, das einen Verzahnungsabschnitt aufweist, der komplementär zu dem Verzahnungsabschnitt 104 der Kopplungseinrichtung 100 ausgebildet ist. Durch die ineinander greifenden Verzahnungen wird eine axiale Verschiebung des Kopplungselements 106 relativ zu der Kopplungseinrichtung 100 möglich. Das Kopplungselement 106 weist einen Zentrierabschnitt 107 auf, mit dem das Kopplungselement 106 radial innen an dem Innenring des inneren Betätigungslagers 49, das auch als Einrücklager bezeichnet wird, zum Beispiel in Form einer Pressverbindung zentriert ist.

Zur Brennkraftmaschine 3 hin weist das Kopplungselement 106 einen sich in radialer Richtung erstreckenden Führungsabschnitt 108 auf, der an dem Betätigungshebel 45 anliegt. Durch mindestens eine Mitnehmernase 110 ist das Kopplungselement 106 drehfest mit dem Betätigungshebel 45 verbunden. Der Innenring des Einrücklagers 49 und der Betätigungshebel 45 drehen jeweils mit Motordrehzahl. Demzufolge wir die Pumpe 81 direkt von der Brennkraftmaschine angetrieben, die auch als Verbrennungsmotor bezeichnet wird. Aufgrund der axialen

Bewegung des Einrücklagers 49 beim Betätigen der Lamellenkupplungsanordnung 38 ist das radial äußere Ende des Führungsabschnitts 108 nicht mit dem Innenlamellenträger 40 der Lamellenkupplungsanordnung 38 verbunden. An dem dem Getriebe zugewandten Ende des Innenlamellenträgers 40 ist ein Führungsabschnitt 111 angebracht, der den Austritt von Kühlmittel reduzieren soll.

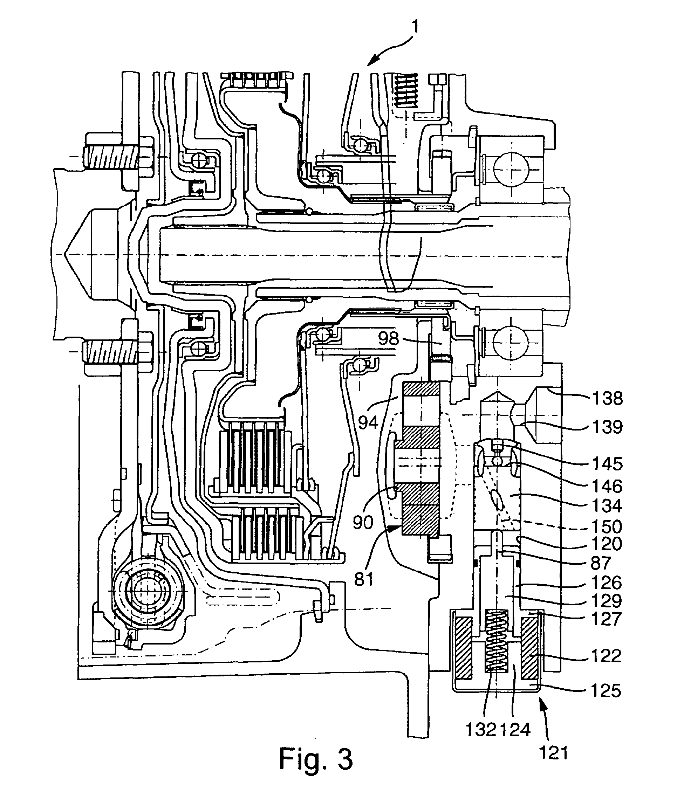

Der Pumpendeckel 94 weist radial innen einen Ansatz 109 auf, der sich an dem Pumpenzahnrad 96 vorbei bis zu dem Antriebszahnrad 98 hin erstreckt. An dem Ansatz 109 ist ein axialer Anschlag 112 für das Antriebszahnrad 98 ausgebildet. Der Anschlag 112 verhindert beim Abstellen der Brennkraftmaschine ein unerwünschtes Rückschlagen des Antriebszahnrads 98. Wie man unter anderem auch in Figur 3 sieht, wurde der Pumpendeckel 94 bewusst um das Antriebszahnrad 98 herumgezogen, um den durch die Schrägverzahnung des Zahnrad bedingten Leckagepfad zu schließen und das Öl unter dem Zahnrad 98 hindurch zur Kupplung zu führen. Rechts wird, wie unten beschrieben, durch eine Dichtscheibe 116 abgedichtet.

Die Getriebeeingangswelle 42 ist mit Hilfe einer Lagereinrichtung 115 zumindest in radialer Richtung an dem Getriebegehäuseabschnitt 82 gelagert. Die Dichtscheibe 116, die auf der der Brennkraftmaschine 3 zugewandten Seite an der Lagereinrichtung 115 anliegt, verhindert, dass Kühlmittel durch die Lagereinrichtung 115 austritt. Zu diesem Zweck kann auch alternativ eine Dichtscheibe 118 in der Lagereinrichtung 115 vorgesehen sein. Von der Dichtscheibe 116 erstreckt sich ein abgewinkelter Arm zur Brennkraftmaschine 3 hin, an dem ein axialer Anschlag 119 für das Antriebszahnrad 98 ausgebildet ist, der gegenüber dem Anschlag 112 an dem Ansatz 109 des Pumpendeckels 94 angeordnet ist.

In dem Getriebegehäuseabschnitt 82 ist ein Sackloch 120 ausgespart, in dem ein Saugregelventil 121 aufgenommen ist. Das Saugregelventil 121 umfasst einen Magneten 122, der zur Umgebung hin durch ein Gehäuse 123 abgeschirmt ist. Der Magnet 122 hat die Gestalt eines Rings mit rechteckförmigem Querschnitt. Innerhalb des Magneten 122 ist eine Hülse 124 angeordnet, an deren äußeren Ende ein Bund 125 ausgebildet ist. In einem axialen Abstand zu der Hülse 124 ist, bezogen auf das Sackloch 120, nach innen hin eine weitere Hülse 126 angeordnet, die einen Bund 127 aufweist. Der Bund 127 liegt an einem Absatz 128 an, der am äußeren Ende des Sacklochs 120 ausgebildet ist.

In der Hülse 126 ist ein Steuerkolben 129 hin und her bewegbar aufgenommen, an dessen, bezogen auf das Sackloch 120, nach innen gerichteten Ende ein Stößel 130 ausgebildet ist. Das äußere Ende des Steuerkolbens 129 ist durch eine Schraubendruckfeder 132 beaufschlagt, die zwischen dem Steuerkolben 129 und der Hülse 124 vorgespannt ist. Durch die Vorspannkraft der Feder 132 wird das freie Ende des Stößels 130 gegen einen Ventilkolben 134 gedrückt, der in dem Sackloch 120 hin und her bewegbar aufgenommen ist. Das Sackloch 120 erstreckt sich in radialer Richtung auf die Rotationsachse 80 zu. An dem radial inneren Ende des Ventilkolbens 134 ist eine Dichtfläche 135 ausgebildet, die sich in der in Figur 1 dargestellten Stellung des Ventilkolbens 134 an einem Sitz 136 in Anlage befindet.

Das Kühlmittel gelangt durch einen Anschluss 138 durch eine als Blende wirkende Verbindungsbohrung 139 zu dem Ventilkolben 134. Wenn der Ventilkolben 134 mit seiner Dichtfläche 135 von dem Sitz 136 abhebt, dann gelangt das Kühlmittel an dem Ventilkolben 134 vorbei zu einem Kanal 141, der in Figur 1 gestrichelt angedeutet ist. Das von der Pumpe 81 angesaugte Kühlmittel, zum Beispiel Öl, gelangt über einen (nicht dargestellten) Ölkühler zu der Stelle 143, wo es aus dem Getriebegehäuseabschnitt 82 austritt. In der in Figur 1 dargestellten geschlossenen Stellung des Ventilkolbens 134 gelangt ein verringerter Kühlmittelstrom durch eine Längsbohrung 145 und eine Querbohrung 146, die in dem Ventilkolben 134 ausgebildet sind, von dem Anschluss 138 zu dem Kanal 141.

In Figur 2 ist die Pumpe 81 im Schnitt dargestellt. Bei der Kühlölpumpe 81 handelt es sich um eine Innenzahnradpumpe, insbesondere um eine Gerotorpumpe. Die Pumpe 81 umfasst hauptsächlich das Hohlrad 84 und das Sonnenrad 87 sowie den Pumpendeckel 94, der mit dem Getriebegehäuseabschnitt 82 verschraubt ist. Eine zusätzliche Abdichtung der Mitte des Sonnenrads 87, wie bei über das Sonnenrad angetriebenen Pumpen, ist nicht notwendig.

Die in den Figuren 1 und 2 dargestellte Pumpe funktioniert wie folgt. Das vom Ölkühler über das Getriebegehäuse zur Kupplungskühlung fließende Öl tritt an der Stelle 143 aus dem Getriebegehäuse aus und wird zwischen dem Antriebszahnrad 98 und der Kupplungseinrichtung 100 an dem Kopplungselement 106 vorbei nahezu leckagefrei auf den Innenlamellenträger der inneren Kupplung gebracht. Die Dichtscheibe 116 dichtet hierbei den Leckagepfad durch die Lagereinrichtung 115 der Hohlwelle 42 ab. Diese Abdichtung kann auch durch die Dichtscheibe 118 im Lager selbst oder durch einen Wellendichtring erfolgen. Durch diese spezielle Ölführung ist gleichzeitig die Schmierung des Nadellagers 103 und des Antriebszahnrads 98 sowie des Pumpenzahnrads 96 sichergestellt.

Dadurch, dass die Kopplungseinrichtung 100 und das Koppelelement 106 mit Motordrehzahl drehen, und es vorkommen kann, dass bei festgebremstem Fahrzeug die Innenlamellenträger 28 und 40 stillstehen (Steilzustand, Losbrechen des Fahrzeugs am Berg oder unter starker Last), wird aufgrund des zentrifugierten Ölstroms eine gleichmäßige Ölverteilung auf den Innenlamellenträger der inneren Kupplung erreicht. Damit im Betrieb das Kühlöl nicht entweichen kann, ist der Pumpendeckel 94 um das Antriebszahnrad 98 herum gezogen. Die durch die Schrägverzahnung entstehende Axialkraft drückt das Antriebszahnrad 98 gegen den Pumpendeckel 94 und dichtet so zusätzlich ab, wie in Figur 3 besser sichtbar ist.

Der Ventilkolben 134 des Saugregelventils 121 wird im unbestromten Zustand des Magneten 122 durch die Feder 132 mit seiner Dichtfläche 135 gegen den Sitz 136 gedrückt. Der über den Anschluss 138 angesaugte Kühlölstrom kann so nur über die Bohrungen 145, 146, die eine Drossel bilden, zu zwei in der Pumpe 81 ausgebildeten Saugtaschen geführt werden. In diesem Modus arbeitet die Pumpe 81 im abgeregelten Zustand. In diesem Zustand ist nur eine Mindestbeölung der Kupplung sicherzustellen, da die Kupplung geschlossen ist oder eine Schlupfregelung durchgeführt wird.

Im nicht abgeregelten Zustand bewegt sich der Stößel 130 nach unten und damit befindet sich auch der Ventilkolben 134 in seiner geöffneten Stellung. Dabei hebt der Ventilkolben 134 mit seiner Dichtfläche 135 von dem Sitz 136 ab und öffnet die Verbindung von dem Anschluss 138 zu dem Kanal 141. Um die Saugtasche auf der dem Getriebegehäuseabschnitt 82 abgewandten Seite des Sonnenrads 87 zu erreichen, wird der Ölstrom durch ein Durchgangsloch 148 in der Mitte des Sonnenrads 87 geführt. Dadurch ist auf einfache Art und Weise eine zweiseitige Befüllung der Pumpe 81 möglich und die Pumpe 81 kann im nicht abgeregelten Zustand bei erforderlicher Kupplungskühlung befüllt werden. Um bei hohen Temperaturen und bei hohen Drehzahlen den Volumenstrom auch im nicht abgeregelten Zustand zu begrenzen, ist zwischen dem Anschluss 138 und dem Sackloch 120 die Verbindungsbohrung 139 im Querschnitt verengt ausgebildet.

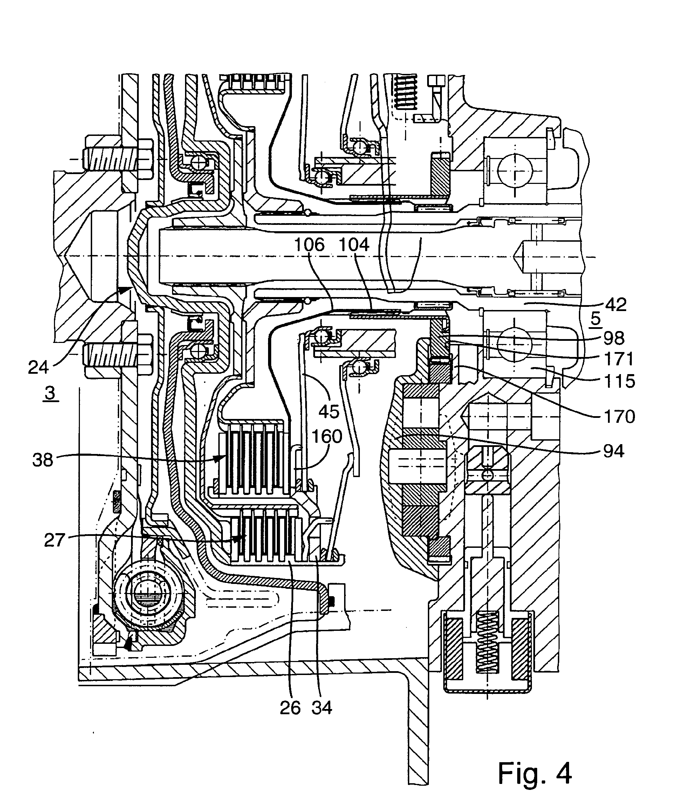

In den Figuren 3 und 4 sind ähnliche Darstellungen wie in Figur 1 gezeigt. Zur Bezeichnung gleicher Teile werden die gleichen Bezugszeichen verwendet. Allerdings sind aus Gründen der Übersichtlichkeit in den Figuren 3 und 4 nur wenige Bezugszeichen eingezeichnet. Um Wiederholungen zu vermeiden, wird auf die vorangegangene Beschreibung der Figur 1 verwiesen. Im Folgenden wird nur auf die Unterschiede zwischen den Ausführungsbeispielen eingegangen.

In Figur 3 ist der Ventilkolben 134 länger als bei dem in Figur 1 dargestellten Ausführungsbeispiel ausgebildet, um die Führung in dem Sackloch 120 zu verbessern. Darüber hinaus ist der Ventilkolben 134 mit einem Verbindungskanal 150 ausgestattet, der den Durchtritt von Kühlmittel beim Hin- und Herbewegen des Ventilkolbens 134 ermöglicht und für einen Druckausgleich sorgt. In Figur 1 ist dies durch ein großes Spiel zwischen 134/120 bzw. eine kleine Kerbe am Außendurchmesser des Kolbens 134 sichergestellt.

Bei dem in Figur 4 dargestellten Ausführungsbeispiel ist das Lager 115 der Hohlwelle 42 von der Getriebeseite her montierbar. Der Getriebegehäuseabschnitt 82 ist in einem Bereich 170 radial so nach innen gezogen, dass er auf der der Brennkraftmaschine 3 zugewandten Seite einen Anschlag 171 für das Antriebszahnrad 98 bildet. Auf der dem Getriebe 5 zugewandten Seite bildet der Wandabschnitt 170 einen Anschlag für die Lagereinrichtung 115. Die Verzahnung des Antriebszahnrads 98 und des Pumpenzahnrads 96 ist bei dem in Figur 4 dargestellten Ausführungsbeispiel in die andere Richtung geschrägt wie bei den vorangegangenen Ausführungsbeispielen.

Ein in Figur 4 vorgesehener Anschlag 99 an dem Pumpendeckel 94 ist nur örtlich an einer Stelle notwendig, um die Verschiebung des Zahnrades 98 nach links zu begrenzen. Gedichtet wird im Betrieb dadurch, dass das Zahnrad aufgrund seiner Schrägverzahnung nach rechts gegen das Getriebegehäuse gedrückt wird. Hier liegt es vollflächig an. Zwischen Zahnrad und Getriebegehäuse bzw. zwischen Zahnrad und Pumpengehäuse in Figur 1 kann noch eine gehärtete Anlaufscheibe gelegt werden, falls erforderlich.

Außerdem ist bei dem in Figur 4 dargestellten Ausführungsbeispiel das Kopplungselement 106 nicht an dem inneren Einrücklager zentriert, sondern an dem äußeren Lamellenträger 26 der äußeren Lamellenkupplung 27 eingehängt. Dadurch wird eine drehfeste Verbindung zwischen dem Kupplungseingangsteil 24 und dem Antriebszahnrad 98 geschaffen. Das radial äußere Ende des Kopplungselements 106 liegt an einem Druckstück 160 an, das ein Auflager für den Betätigungshebel 45 bildet.

### Bezugszeichenliste

- 1.: Antriebsstrang
- 2.: -
- 3.: Antriebseinheit
- 4.: Kurbelwelle
- 5.: Getriebe
- 6. Doppelkupplung
- 7.: -
- 8.: Schwingungsdämpfungseinrichtung
- 9.: Schraubverbindung
- 10.: Eingangsteil von 8
- 11.: Anlasserzahnkranz
- 12.: Masse
- 13.: -
- 14.: Schwingungsdämpferkäfig
- 15.: -
- 16.: Federeinrichtung
- 17.: -
- 18.: Ausgangsteil von 8
- 19.: Masse
- 20.: -
- 21.: Verbindungsteil
- 22.: -
- 23.: -
- 24.: Kupplungseingangsteil
- 25.: -
- 26.: Außenlamellenträger
- 27.: erste Lamellen-Kupplungsanordnung
- 28.: Innenlamellenträger
- 29.: -
- 30.: Nabenteil
- 31.: erste Getriebeeingangswelle
- 32.: -
- 33.: -
- 34.: Verbindungsteil
- 35.: -
- 36.: Außenlamellenträger
- 37.: -
- 38.: zweite Lamellen-Kupplungsanordnung
- 39.: -
- 40.: Innenlamellenträger
- 41.: Nabenteil
- 42.: zweite Getriebeeingangswelle
- 43.: -
- 44.: Betätigungshebel
- 45.: Betätigungshebel
- 46.: -
- 47.: -
- 48.: Betätigungslager
- 49.: Betätigungslager
- 50.: -
- 51.: Betätigungskolben
- 52.: Betätigungskolben
- 53.: -
- 54.: -
- 55.: Kupplungsdeckel
- 56.: Nassraum
- 57.: Aufnahmeraum, Trockenraum
- 58.: Getriebegehäuseabschnitt
- 59.: -
- 60.: Ende
- 61.: -
- 62.: Aufnahmeraum mit U-förmigem Querschnitt
- 63.: -
- 64.: Basis
- 65.: -
- 66.: Schenkel
- 67.: Schenkel
- 68.: -
- 69.: -
- 70.: Dünnringkugellager
- 71.: Sicherungsring
- 72.: Radialwellendichtring
- 73.: Anschlag
- 74.: Anschlag
- 75.: -
- 76.: -
- 77.: -
- 78.: Reibeinheiten
- 79.: Reibeinheiten
- 80.: Rotationsachse
- 81.: Pumpe
- 82.: Getriebegehäuseabschnitt
- 83.: Kupplungsglocke
- 84.: Hohlrad
- 85.: Innenverzahnung
- 86.: -
- 87.: Sonnenrad
- 88.: Außenverzahnung
- 89.: -
- 90.: Lagerstummel
- 91.: planparallele Fläche
- 92.: planparallele Fläche
- 93.: -
- 94.: Pumpendeckel
- 95.: Mitnehmernase
- 96.: Pumpenzahnrad
- 97.: -
- 98.: Antriebszahnrad
- 99.: Anschlag
- 100.: Kopplungseinrichtung
- 101.: Mitnehmernase
- 102.: Durchgangsabschnitt + Lagerfunktion
- 103.: Nadellager
- 104.: Verzahnungsabschnitt
- 105.: -
- 106.: Kopplungselement
- 107.: Zentrierabschnitt
- 108.: Führungsabschnitt
- 109.: Ansatz an 94
- 110.: Mitnehmernase
- 111.: Führungsabschnitt
- 112.: Anschlag
- 113.: -
- 114.: -
- 115.: Lagereinrichtung für 42
- 116.: Dichtscheibe
- 117: . -
- 118.: Dichtscheibe
- 119.: Anschlag
- 120.: Sackloch
- 121.: Saugregelventil
- 122.: Magnet
- 123.: Gehäuse
- 124.: Hülse
- 125.: Bund
- 126.: Hülse
- 127.: Bund
- 128.: Gewindebolzen
- 129.: Absatz
- 130.: Stößel
- 131.: -
- 132.: Feder
- 133.: -
- 134.: Ventilkolben
- 135.: Dichtfläche
- 136.: Sitz
- 137.: -
- 138.: Anschluss
- 139.: Verbindungsbohrung
- 140.: -
- 141.: Kanal
- 142.: -
- 143.: Stelle
- 144.: -
- 145.: Längsbohrung
- 146.: Querbohrung
- 147.: -
- 148.: Durchgangsloch
- 149.: -
- 150.: Verbindungskanal
- 151.: -
- 152.: -
- 153.: -
- 154.: -
- 156.: -
- 157.: -
- 159.: -
- 160.: Druckstück
- 161.: -
- 162.: -
- 163.: -
- 164.: -
- 165.: -
- 166.: -
- 167.: -
- 168.: -
- 169.: -
- 170.: Wandabschnitt
- 171.: Anschlag

## Patentansprüche

1. Drehmomentübertragungseinrichtung im Antriebsstrang (1) eines Kraftfahrzeugs zur Übertragung von Drehmoment zwischen einer Brennkraftmaschine (3) mit einer Kurbelwelle (4) und einem Getriebe mit zumindest einer Getriebeeingangswelle (31,42) mit mindestens einer Reibungskupplung (27,38) **gekennzeichnet durch** die Kombination folgender Merkmale:
- die Getriebeeingangswelle (31,42) ist mit der Kurbelwelle (4) mittels der Reibungskupplung (27,38) koppelbar;
- die Reibungskupplung (27,38) verfügt über antriebsseitige und/oder abtriebsseitige Reibeinheiten (78,79), die mittels einer axialen Verpressung entlang einer Rotationsachse (80) der Getriebeeingangswelle (31,42) miteinander zur Bildung eines Reibeingriffs beaufschlagbar sind;
- die Reibeinheit beziehungsweise die Reibeinheiten (78,79) ist beziehungsweise sind aus einer Mehrzahl schichtweise in axialer Richtung antriebsseitig und abtriebsseitig abwechselnder Reibpartner gebildet;
- die Reibeinheit beziehungsweise die Reibeinheiten (78,79) der Reibungskupplung (27,38) werden mittels eines der jeweiligen Reibeinheit zugeordneten Betätigungsteils (45,45) entgegen eines Anschlags beaufschlagt;
- mit dem Betätigungsteil (44,45) der Reibungskupplung (27,38) ist unter Zwischenschaltung eines Betätigungslagers (48,49) eine drehfest mit einem feststehenden Gehäuseteil (58) verbundene, axial auf das jeweilige Betätigungsteil (44,45) einwirkende Betätigungsvorrichtung (51,52) angeordnet;
- die Reibungskupplung (27,38) wird in nasser Betriebsweise betrieben.

2. Drehmomentübertragungseinrichtung im Antriebsstrang (1) eines Kraftfahrzeugs zur Übertragung von Drehmoment zwischen einer Brennkraftmaschine (3) mit einer Kurbelwelle (4) und einem Doppelkupplungsgetriebe mit zumindest zwei Getriebeeingangswellen (31,42) mit zwei Reibungskupplungen (27,38) **gekennzeichnet durch** die Kombination folgender Merkmale:
- je eine Getriebeeingangswelle (31,42) ist mit der Kurbelwelle (4) mittels einer Reibungskupplung (27,38) koppelbar;
- jede Reibungskupplung (27,38) verfügt über antriebsseitige und abtriebsseitige Reibeinheiten (78,89), die mittels einer axialen Verpressung entlang einer Rotationsachse (80) zumindest einer der Getriebeeingangswellen (31,42) miteinander zur Bildung eines Reibeingriffs beaufschlagbar sind;
- die Reibeinheiten (78,79) der beiden Reibungskupplungen (27,38) sind radial übereinander oder axial hintereinander angeordnet;
- die Reibeinheiten (78,79) sind aus einer Mehrzahl schichtweise in axialer Richtung antriebsseitig und abtriebsseitig abwechselnder Reibpartner gebildet;
- die Reibeinheiten (78,79) jeweils einer Reibungskupplung (27,38) werden mittels eines der jeweiligen Reibeinheit zugeordneten Betätigungsteils (45,45) entgegen eines Anschlags beaufschlagt;
- mit dem Betätigungsteil (44,45) jeder Reibungskupplung (27,38) ist unter Zwischenschaltung eines Betätigungslagers (48,49) jeweils eine drehfest mit einem feststehenden Gehäuseteil (58) verbundene, axial auf das jeweilige Betätigungsteil (44,45) einwirkende Betätigungsvorrichtung (51,52) angeordnet;
- beide Reibungskupplungen (27,38) werden in nasser Betriebsweise betrieben.

3. Drehmomentübertragungseinrichtung nach Anspruch 1 oder 2, **dadurch gekennzeichnet, dass** zumindest eine Betätigungsvorrichtung eine elektromechanische, elektrohydraulische oder elektropneumatische Betätigungsvorrichtung ist.

4. Drehmomentübertragungseinrichtung nach Anspruch 3, **dadurch gekennzeichnet, dass** die Beaufschlagung zumindest einer Reibungskupplung (27,38) mittels eines im Wesentlichen senkrecht zu einer der Getriebeeingangswellen (31,42) angeordneten elektromotorischen Drehantriebs erfolgt, wobei die rotatorische Bewegung mittels eines Getriebes in eine translatorische Bewegung entlang einer der Getriebeeingangswellen (31,42) zur Beaufschlagung des entsprechenden Betätigungslagers (48,49) gewandelt wird.

5. Drehmomentübertragungseinrichtung nach Anspruch 3, **dadurch gekennzeichnet, dass** die Beaufschlagung zumindest einer Reibungskupplung (27,28) mittels eines im wesentlichen parallel zu einer der Getriebeeingangswellen (31,42) angeordneten elektromotorischen Drehantriebs erfolgt, wobei die rotatorische Bewegung mittels eines Getriebes in eine translatorische entlang dieser Getriebeeingangswelle zur Beaufschlagung des entsprechenden Betätigungslagers gewandelt wird.

6. Drehmomentübertragungseinrichtung, insbesondere nach einem der vorhergehenden Ansprüche, **dadurch gekennzeichnet, dass** ein Kühlmittelstrom zur Kühlung zumindest einer Reibungskupplung (27,38) mittels einer Pumpe (81) bereitgestellt wird, die im Bereich einer zwischen einer Wandung der Brennkraftmaschine und einer Wandung des Doppelkupplungsgetriebes gebildeten Kupplungsglocke, oder hinter der Wandung oder innerhalb der Wandung des Doppelkupplungsgetriebes angeordnet ist.

7. Drehmomentübertragungseinrichtung nach Anspruch 6, **dadurch gekennzeichnet, dass** die Pumpe (81) für die Bereitstellung des Kühlmittelstroms und zur Schmierung, zum Beispiel der Antriebszahnräder verwendet wird.

8. Drehmomentübertragungseinrichtung nach Anspruch 7 oder 8, **dadurch gekennzeichnet, dass** die Pumpe (81) von der Kurbelwelle (4) oder einem mit dieser verbundenen Bauteil oder einem separaten Elektromotor angetrieben wird.

9. Drehmomentübertragungseinrichtung nach einem der Ansprüche 6 bis 8, **dadurch gekennzeichnet, dass** die Pumpe (81) eine Innenzahnradpumpe mit einem Hohlrad (84) mit einer Innenverzahnung (85) ist, mit der ein Sonnenrad (87) mit einer Außenverzahnung (88) kämmt, wobei zum Ansaugen des Kühlmittels eine Saugsichel vorgesehen ist und das Sonnenrad mittels seiner Außenverzahnung an einem zu dieser komplementären Segment der Saugsichel radial gelagert ist.

10. Drehmomentübertragungseinrichtung nach einem der Ansprüche 6 bis 8, **dadurch gekennzeichnet, dass** die Pumpe (81) eine Gerotorpumpe mit einem Hohlrad (84) mit einer Innenverzahnung (85) ist, mit der ein Sonnenrad (87) mit einer Außenverzahnung (88) kämmt.

11. Drehmomentübertragungseinrichtung nach einem der Ansprüche 6 bis 10, **dadurch gekennzeichnet, dass** das Sonnenrad (87) der Pumpe (81) einen Lagerstummel (90) aufweist, durch den das Sonnenrad einseitig gelagert ist.

12. Drehmomentübertragungseinrichtung nach einem der Ansprüche 6 bis 11, **dadurch gekennzeichnet, dass** das Hohlrad (84), zum Beispiel mit Hilfe einer Nase, einem Einlegeteil oder einstückig, drehfest mit einem Pumpenzahnrad (96) gekoppelt ist.

13. Drehmomentübertragungseinrichtung nach Anspruch 12, **dadurch gekennzeichnet, dass** das Pumpenzahnrad (96) mit einem Antriebszahnrad (98) kämmt, das mit Hilfe einer Kopplungseinrichtung (100), die Drehmoment überträgt und gleichzeitig Ölführung ist, drehfest mit einem Eingangsteil einer der Reibungskupplungen (27,38) gekoppelt ist.

14. Drehmomentübertragungseinrichtung nach Anspruch 13, **dadurch gekennzeichnet, dass** die Kopplungseinrichtung (100) mindestens eine Mitnehmernase (101) aufweist, die in eine Mitnehmerausnehmung eingreift, die an dem Antriebszahnrad (98) vorgesehen ist.

15. Drehmomentübertragungseinrichtung nach Anspruch 13 oder 14, **dadurch gekennzeichnet, dass** die Kopplungseinrichtung einen Durchgangsabschnitt (102) mit Verbindungsnuten aufweist, die zwischen dem Antriebszahnrad (98) und einer Lagereinrichtung (103) angeordnet sind, durch welche das Antriebszahnrad (98) auf einer der Getriebeeingangswellen (42) gelagert ist.

16. Drehmomentübertragungseinrichtung nach einem der Ansprüche 13 bis 15, **dadurch gekennzeichnet, dass** die Kopplungseinrichtung (100) einen Abschnitt (104) mit einer Verzahnung aufweist, über welche die Kopplungseinrichtung (100) drehfest und vorzugsweise axial verschieblich mit einem Kopplungselement (106) verbunden ist.

17. Drehmomentübertragungseinrichtung nach einem der Ansprüche 12 bis 16, **dadurch gekennzeichnet, dass** das Kopplungselement (106) einen Zentrierabschnitt (107), vorzugsweise eine Nase, aufweist, der an einem der Betätigungslager (49) anliegt beziehungsweise die in eine Tellerfederzunge einrastet.

18. Drehmomentübertragungseinrichtung nach einem der Ansprüche 12 bis 17, **dadurch gekennzeichnet, dass** das Kopplungselement (106) direkt mit einem der beiden äußeren Lamellenträgem gekoppelt ist (Fig. 4).

19. Drehmomentübertragungseinrichtung nach einem der Ansprüche 12 bis 18, **dadurch gekennzeichnet, dass** die Pumpe (81) einen Pumpendeckel (94) aufweist, an dem das Antriebszahnrad (98) zur Anlage kommen kann.

20. Drehmomentübertragungseinrichtung nach einem der Ansprüche 12 bis 19, **dadurch gekennzeichnet, dass** die Pumpe (81) an einen Getriebegehäuseabschnitt (82) angebaut ist, an dem das Antriebszahnrad (98) in axialer Richtung zur Anlage kommen kann.

21. Drehmomentübertragungseinrichtung nach einem der Ansprüche 5 bis 20, **dadurch gekennzeichnet, dass** ein von der Pumpe (81) erzeugter Volumenstrom mittels einer Saugdrossel (121) geregelt wird.

22. Drehmomentübertragungseinrichtung nach einem der Ansprüche 8 bis 21, **dadurch gekennzeichnet, dass** der Volumenstrom durch ein Durchgangsloch (148) in dem Sonnenrad (87) der Pumpe (81) hindurch geführt ist.

23. Drehmomentübertragungseinrichtung nach Anspruch 19 oder 20, **dadurch gekennzeichnet, dass** die Steuerung mittels eines Elektromagnetventils erfolgt.

24. Drehmomentübertragungseinrichtung nach einem der Ansprüche 5 bis 23, **dadurch gekennzeichnet, dass** zwischen die Pumpe (81) und die Reibeinheiten (78,79) ein Ölkühler geschaltet ist.

25. Drehmomentübertragungseinrichtung nach einem der vorhergehenden Ansprüche, **dadurch gekennzeichnet, dass** das Gehäuse um das Saugregelventil, der Ventilkolben des Saugregelventils, der Pumpendeckel (94), die Pumpenzahnräder (87,84) und/oder die Antriebszahnräder (96,98) aus Kunststoff, vorzugsweise einem duroplastischen Material, gebildet sind.

26. Drehmomentübertragungseinrichtung nach einem der vorhergehenden Ansprüche, **dadurch gekennzeichnet, dass** der Ventilkolben (134) mit einem Verbindungskanal (150) ausgestattet ist, der den Durchtritt von Kühlmittel beim Hin- und Herbewegen des Ventilkolbens (134) ermöglicht und für einen Druckausgleich sorgt.

27. Drehmomentübertragungseinrichtung nach einem der Ansprüche Anspruch 1 bis 26, **dadurch gekennzeichnet, dass** zwischen dem Ventilkolben (134) und einem Sackloch (120) in einem Getriebegehäuseabschnitt (82) ein ausreichendes Spiel vorgesehen ist, das den Durchtritt von Kühlmittel beim Hin- und Herbewegen des Ventilkolbens (134) ermöglicht und/oder für einen Druckausgleich sorgt.

28. Drehmomentübertragungseinrichtung nach einem der Ansprüche Anspruch 1 bis 26, **dadurch gekennzeichnet, dass** am Außendurchmesser des Ventilkolbens (134) eine Kerbe vorgesehen ist, die den Durchtritt von Kühlmittel beim Hin- und Herbewegen des Ventilkolbens (134) ermöglicht und/oder für einen Druckausgleich sorgt.

29. Doppelkupplungsgetriebe mit einer Drehmomentübertragungseinrichtung entsprechend den Ansprüchen 1 bis 28.

30. Antriebsstrang mit einer Brennkraftmaschine und einem Doppelkupplungsgetriebe mit einer zwischen diesen angeordneten Drehmomentübertragungseinrichtung entsprechend den Ansprüchen 1 bis 28.

31. Verwendung einer Drehmomentübertragungseinrichtung entsprechend den Ansprüchen 1 bis 28 für einen Antriebsstrang in einem Kraftfahrzeug.
